# EUROPÄISCHE PATENTSCHRIFT

(11) **EP 1 366 314 B1**
(45) Veröffentlichungstag und Bekanntmachung des Hinweises auf die Patenterteilung: **17.08.2005**
(21) Anmeldenummer: 02729926.2
(22) Anmeldetag: 12.02.2002
(51) Int. Cl.: F16J 9/14, F16J 9/22

(54) **HUBKOLBENMASCHINE**
RECIPROCATING ENGINE
MOTEUR A PISTON ALTERNATIF

(30) Priorität: 08.03.2001 DE 10111122
(43) Veröffentlichungstag der Anmeldung: 03.12.2003
(73) Patentinhaber: MAN B & W Diesel A/S, 2450 Copenhagen SV (DK)
(72) Erfinder: FOGH, Jesper, Weis, DK-2000 Frederiksberg (DK)
(74) Vertreter: Munk, Ludwig, Dipl.-Ing.
(86) Internationale Anmeldenummer: PCT/EP2002/001431
(87) Internationale Veröffentlichungsnummer: WO 2002/070926

(56) Entgegenhaltungen:
- WO-A-94/12815
- WO-A-97/11294
- WO-A-97/11295

## Beschreibung

Die Erfindung betrifft eine Hubkolbenmaschine, insbesondere Hubkolbenbrennkraftmaschine, vorzugsweise inform eines Zweitakt-Großdieselmotors, mit wenigstens einem in einem Zylinder aufgenommenen Kolben, der mit wenigstens einem in einer zugeordneten Kolbenringnut angeordneten Kolbenring versehen ist, der nach Art von Nut und Feder ineinander eingreifende, eine über den Umfang spaltfrei durchgehende, mit einer zylinderseitigen Lauffläche zusammenwirkende, äußere Umfangsfläche bildende Endstücke aufweist.

Bei einem schlitzlosen Kolbenring vorstehend angedeuteter Art kann es vorkommen, dass sich bei höheren Zünddrücken unerwünscht hohe Belastungen des Kolbenrings ergeben, was zu hohen Belastungen und starkem Verschleiß der zugeordneten Sitz- und Laufflächen führen kann. Es wurde daher bereits vorgeschlagen, über die Kolbenringhöhe durchgehende, umfangsseitige Leckagenuten vorzusehen.

Ein derartiger Kolbenring ist aus der EP 0742 875 B1 bekannt. Nachteilig dabei ist, dass der lichte Querschnitt der umfangsseitigen Leckagenuten mit fortschreitendem Verschleiß des Kolbenrings immer geringer wird, so dass schließlich ein gasdichter Kolbenring vorliegt und sich wiederum die oben erwähnten Nachteile hinsichtlich unerwünscht hoher Belastungen und daher starken Verschleißes der zugeordneten Sitz und Laufflächen ergeben. Ungünstig ist dabei in diesen Zusammenhang, dass im Rahmen einer einfachen Inspektion des Zylinderkopfes der noch vorhandene Restquerschnitt der umfangsseitigen Leckagenuten erfahrungsgemäß nur sehr schwer oder überhaupt nicht feststellbar ist. Es ist daher in der Vergangenheit bereits häufig vorgekommen, dass ein Kolbenring oben erwähnter Art plötzlich dicht wurde, ohne dass dies von der Bedienungsmannschaft rechtzeitig bemerkt wurde, und diese von den genannten Nachteilen hinsichtlich Verschleiß der Sitz- und Laufflächen überrascht wurde.

Hiervon ausgehend ist es daher die Aufgabe der vorliegenden Erfindung, bei einer Anordnung eingangs erwähnter Art mit einfachen und kostengünstigen Mitteln einen möglichst langen, verschleißarmen Betrieb sowie eine hohe Bedienungsfreundlichkeit zu gewährleisten.

Diese Aufgabe wird erfindungsgemäß dadurch gelöst, dass wenigstens ein Endstück mit wenigstens einer radialen Durchgangsausnehmung versehen ist, die im geöffneten Zustand eine Leckage ermöglicht und die im Neuzustand des Kolbenrings verschlossen ist und im Laufe des Verschleißes des Kolbenrings dadurch geöffnet wird, dass die ineinander eingreifenden Endstücke mit zunehmendem Verschleiß immer weiter auseinander gezogen werden.

Mit diesen Maßnahmen lassen sich die eingangs geschilderten Nachteile vollständig vermeiden. Die im Bereich wenigstens eines Endstücks vorgesehene, radiale Durchgangsausnehmung ermöglicht in vorteilhafter Weise auch bei einem schlitzlosen Kolbenring eine gezielte Leckage, die bei zunehmendem Verschleiß des Kolbenrings nicht automatisch abnimmt oder ganz verschwindet. Mit den erfindungsgemäßen Maßnahmen lässt sich daher bis zum vollständigen Verschleiß des Kolbenrings eine erwünschte Leckage aufrechterhalten, was auch bei Anordnungen mit hohen Zünddrücken bis zum vollständigen Verschleiß des Kolbenrings eine vergleichsweise geringe Beanspruchung und damit eine schonende Betriebsweise ergibt. Gleichzeitig kann die vorgesehene Verschleißdicke des Kolbenrings voll ausgenutzt werden, so dass sich hohe Gesamtstandzeiten und damit ein geringer Instandhaltungsaufwand ergeben. Da der erfindungsgemäße Kolbenring nicht plötzlich dicht wird, lässt sich der obige Vorteil dadurch noch verstärken, dass für den erfindungsgemäßen Kolbenring ein Material mit vergleichsweise hoher Festigkeit verwendbar ist, ohne dass sich dies ungünstig auf die Beanspruchung der Sitz- und Laufflächen auswirken würde. Bei einem Kolbenring, der plötzlich dicht wird, würde dies zu einer schnellen Zerstörung der Sitz- und Laufflächen führen. Außerdem ist davon auszugehen, dass die erfindungsgemäße Durchgangsausnehmung vom Spalt zwischen Kolben und Zylinderbuchse vergleichsweise weit entfernt ist, so dass dort vergleichsweise geringe Temperaturen zu erwarten sind, was sich ebenfalls positiv auf die erreichbare Lebensdauer auswirkt und insbesondere beim obersten Kolbenring eines Kolbenringpakets günstig ist. Ein weiterer Vorteil der erfindungsgemäßen Maßnahmen ist darin zu sehen, dass die erfindungsgemäße Durchgangsausnehmung bei einer Inspektion des Zylinderkopfes leicht einsehbar ist, was eine zuverlässige Kontrolle ermöglicht, so dass die Bedienungsmannschaft nicht von einem unbrauchbar gewordenen Kolbenring überrascht werden kann. Die erfindungsgemäßen Maßnahmen ergeben daher neben langen Gesamtstandzeiten auch eine hohe Sicherheit und Bedienungsfreundlichkeit und damit insgesamt eine ausgezeichnete Wirtschaftlichkeit.

Vorteilhafte Ausgestaltungen und zweckmäßige Fortbildungen der übergeordneten Maßnahmen sind in den Unteransprüchen angegeben. So kann bei einem Kolbenring, bei dem ein Endstück eine nach radial außen offene, durch einen inneren, achsparallelen Schenkel und einen hierzu rechtwinklig verlaufenden, oberen Schenkel begrenzte Nut und das andere Endstück einen in diese Nut eingreifenden Finger aufweisen die erfindungsgemäße Durchgangsausnehmung zweckmäßig im Bereich des achsparallelen Schenkels und/oder des Fingers vorgesehen sein. Die erfindungsgemäßen Maßnahmen stehen daher in vorteilhafter Weise einer Verwendung des bereits bewährten Bauprinzips für schlitzlose Kolbenringe nicht entgegen sondern stellen eine erwünschte Verbesserung dieses Bauprinzips dar. Aus einem Erscheinen der erfindungsgemäßen Durchgangsausnehmung, die bei einer Inspektion gut erkennbar ist, ergibt sich hierbei eine zuverlässige Information über den Zustand der umfangsseitigen Leckageausnehmungen. Die im Bereich des achsparalllen Schenkels und/oder des Fingers vorgesehene, erfindungsgemäße Durchgangsausnehmung kann in vorteilhafter Weise auch nachträglich angebracht werden. Die genannten Maßnahmen ermöglichen daher in vorteilhafter Weise auch eine einfache Nachrüstung bereits vorhandener, schlitzloser Kolbenringe mit der erfindungsgemäßen Durchgangsausnehmung.

Es genügt in der Regel, wenn nur der achsparallele Schenkel des eine Nut aufweisenden Endstücks eine erfindungsgemäße Durchgangsausnehmung aufweist. Auf diese Weise ergibt sich nicht nur eine einfache Herstellung, sondern lässt sich auch eine nennenswerte Schwächung des Kolbenrings vermeiden.

Zweckmäßig ist die erfindungsgemäße Durchgangsausnehmung im Bereich der Unterseite des zugeordneten Endstücks vorgesehen. Auf diese Weise ergibt sich ein möglichst großer Abstand der erfindungsgemäßen Durchgangsausnehmung vom Spalt zwischen Kolben und Zylinderbuchse, so dass besonders niedrige Temperaturen zu erwarten sind.

In weiterer Fortbildung der übergeordneten Maßnahmen kann die erfindungsgemäße Durchgangsausnehmung bei einem Kolbenring, der mit umfangsseitigen, von oben bis unten durchgehenden Leckageausnehmungen versehen ist, so ausgebildet und angeordnet sein, dass sie zumindest dann geöffnet ist, wenn sich der Querschnitt der umgangsseitigen Leckageausnehmungen durch Verschleiß so verkleinert hat, dass der Strömungswiderstand einen vorgegebenen Wert übersteigt. Hierdurch ist sichergestellt, dass zunächst die umfangsseitigen Leckageausnehmungen aktiv sind und, wenn diese infolge eines fortgeschrittenen Verschleißes nicht mehr ausreichen, die erfindungsgemäße Durchgangsausnehmung aus zusätzliche Leckageausnehmung hinzukommt. Auf diese Weise lässt sich die Gesamtlebensdauer des Kolbenrings verlängern und sicherstellen, dass der genannte Kolbenring nicht plötzlich dicht wird. Hierdurch wird die Aufmerksamkeit der Bedienungsmannschaft entlastet.

Die erfindungsgemäßen Maßnahmen bieten auch die Möglichkeit, die Durchgangsausnehmung so anzuordnen und auszubilden, dass sich ihr offener Querschnitt im selben Maße vergrößert, wie der Querschnitt der umfangsseitigen Leckageausnehmungen abnimmt. Auf diese Weise lassen sich über einen vergleichsweise langen Zeitraum gleichmäßige Leckageverhältnisse und damit gleiche Betriebsbedingungen erreichen.

Eine andere Ausgestaltung kann darin bestehen, dass die erfindungsgemäße Durchgangsausnehmung so ausgebildet und angeordnet ist, dass sie einen dem lichten Querschnitt des Schlitzes eines geschlitzten Kolbenrings entsprechenden, offenen Querschnitt aufweist. Hieraus ist erkennbar, dass die erfindungsgemäßen Maßnahmen eine hohe Variabilität hinsichtlich des aktiven Leckagequerschnitts ermöglichen, so dass auch unterschiedlichen Anforderungen auf einfache Weise Rechnung getragen werden kann.

Weitere vorteilhafte Ausgestaltungen und zweckmäßige Fortbildungen der übergeordneten Maßnahmen sind in den restlichen Unteransprüchen angegeben und aus der nachstehenden Beispielsbeschreibung anhand der Zeichnung näher entnehmbar.

In der nachstehend beschriebenen Zeichnung zeigen:
- Figur 1: eine Teilansicht eines Vertikalschnitts durch einen Zylinder eines Zweitakt-Großdieselmotors,
- Figur 2: eine Teilansicht eines erfindungsgemäßen Kolbenrings mit ineinander eingreifenden Endstücken in perspektivischer Darstellung,
- Figur 3: einen Schnitt entlang der Linie III/III in Figur 2,
- Figur 4: eine von radial außen gesehene Teilansicht eines erfindungsgemäßen Kolbenrings mit im Neuzustand ineinander eingreifenden Endstücken und
- Figur 5: die Anordnung gemäß Figur 4 nach einer längeren Betriebszeit.

Hauptanwendungsgebiet der Erfindung sind Hubkolbenbrennkraftmaschinen, insbesondere Zweitakt-Großdieselmotoren, wie sie beispielsweise für Schiffsantriebe Verwendung finden. Der Aufbau und die Wirkungsweise derartiger Anordnungen sind an sich bekannt und bedürfen daher im vorliegenden Zusammenhang keiner näheren Erläuterung mehr.

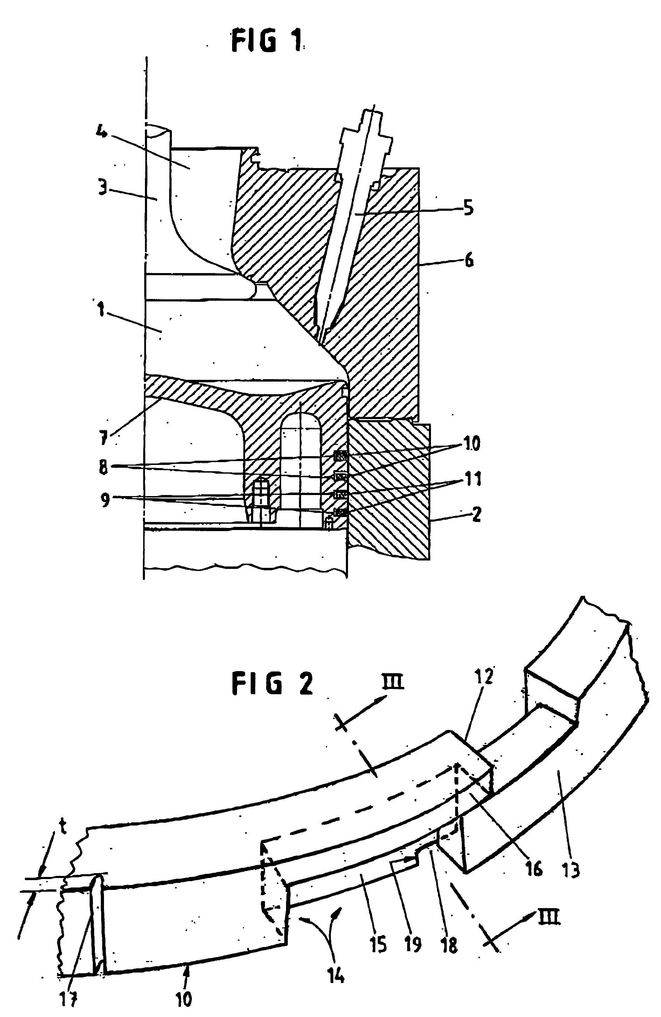

Der in Figur 1 dargestellte, einen Brennraum 1 enthaltende Zylinder eines Zweitakt-Großdieselmotors besteht aus einer Zylinderbuchse 2 und einem auf dieser aufgenommenen, mit einem durch ein Ventil 3 kontrollierten Auslass 4 und mit einem Einspritzventil 5 versehenen Zylinderkopf 6. Die untere, bewegliche Begrenzung des Brennraums 1 wird durch einen in der Zylinderbuchse 2 geführten Kolben 7 gebildet, der aus einem Oberteil und einem hieran befestigten Unterteil bestehen kann. Der Kolben 7 ist im Bereich seines Oberteils mit vier umfangsseitigen Kolbenringnuten 8, 9 versehen, in denen jeweils ein Kolbenring 10, 11 aufgenommen ist.

Die unteren Kolbenringe, hier die zwei unteren Kolbenringe 11, eines derartigen Kolbenringpakets, sind in der Regel als geschlitzte Kolbenringe ausgebildet, deren unter einem Winkel abgeschrägte Enden einander unter Bildung eines Schlitzes oder Spaltes gegenüberstehen. Zumindest der oberste Kolbenring eines Kolbenringpaket vorliegender Art ist zur Vermeidung von Leistungsverlusten als schlitzloser Kolbenring ausgebildet, der eine über seinen ganzen Umfang spaltfrei durchgehende, mit der Lauffläche der Zylinderbuchse 2 zusammenwirkende Umfangsfläche aufweist. Beim vorliegenden Ausführungsbeispiel sind die beiden oberen Kolbenringe 10 des Kolbenringpakets als derartige, schlitzlose Kolbenringe ausgebildet.

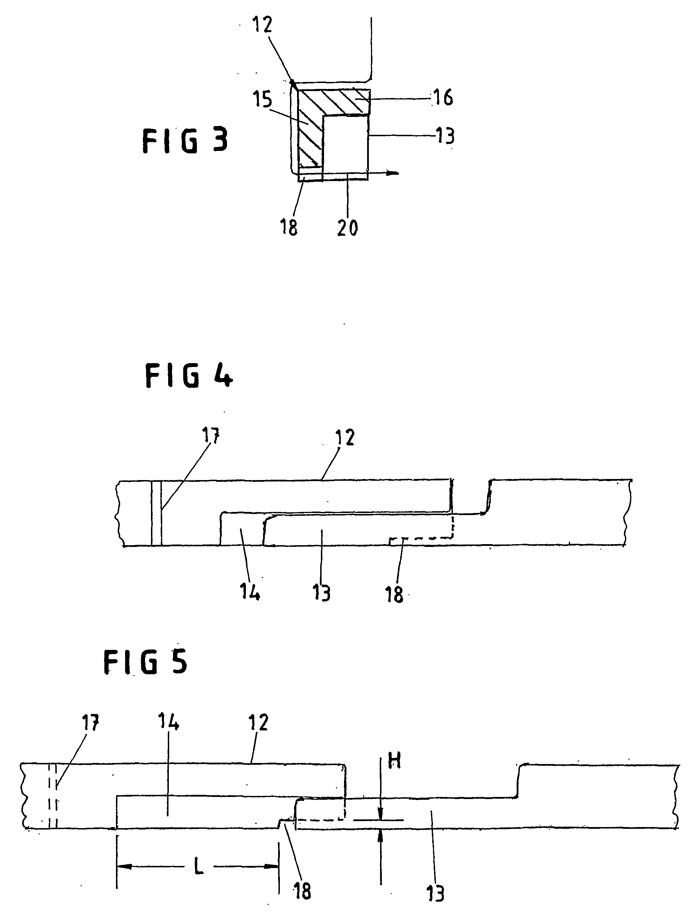

Die schlitzlosen Kolbenringe 10 sind, wie aus Figur 2 erkennbar ist, mit nach Art von Nut und Feder ineinander eingreifen Endstücken 12, 13 versehen. Diese sind so ausgebildet, dass sich im Stoßbereich kein die äußere Umfangsfläche unterbrechender, von oben bis unten durchgehender Spalt ergibt. Bei dem der Figur 2 zugrundeliegenden Beispiel ist das links gezeichnete Endstück 12 mit einer nach radial außen und unten offenen Nut 14 versehen, die, wie auch aus Figur 3 anschaulich erkennbar ist, nach radial innen durch einen parallel zur Kolbenachse verlaufenden Schenkel 15 und nach oben durch einen rechtwinklig hierzu verlaufenden oberen Schenkel 16 begrenzt ist. Das andere, rechts gezeichnete Endstück 13 ist als in die Nut 14 einführbarer, querschnittsmäßig hieran angepasster Finger ausgebildet.

Bei den geschlitzten Kolbenringen ergibt sich im Bereich des zwischen den Kolbenringenden vorhandenen Schlitzes oder Spaltes ein Strömungsweg, durch den eine Leckage stattfinden kann. Die über den Umfang geschlossene, durchgehende Umfangsfläche der schlitzlosen Kolbenringe 10 lässt eine derartige Leckage nicht zu, was, wie oben bereits erwähnt wurde, beim obersten bzw. den oberen Kolbenringen eines Kolbenringpakets erwünscht ist. Um aber dennoch eine ausreichende Druckbeaufschlagung der nachfolgen Kolbenringe zu gewährleisten, ist eine gezielt Leckage erforderlich. Hierzu sind bei dem der Figur 2 zugrundeliegenden Kolbenring 10 umfangsseitig angeordnete, von oben bis unten durchgehende Leckagenuten 17 vorgesehen. Diese können gegenüber einer achsparallelen Mantellinie schräg verlaufen und sind im dargestellten Beispiel lediglich aus Gründen einer vereinfachten Darstellung achsparallel verlaufend gezeichnet. Im Neuzustand besitzen die Leckagenuten 17 eine Tiefe t.

Im Laufe des Betriebs verschleißen die Kolbenringe 10, 11 an ihrer äußeren, mit der Lauffläche der Zylinderbuchse 2 zusammenwirkenden Umfangsfläche, so dass ihre Dicke laufend abnimmt. Diese Dickenabnahme wird dadurch ausgeglichen, dass sich die Kolbenringe aufweiten, wobei bei den geschlitzten Kolbenringen 11 der Abstand zwischen den Kolbenringenden immer größer wird und bei den schlitzlosen Kolbenringen 10 die ineinander eingreifenden Endstücke 12, 13 entsprechend gegeneinander verschoben werden. Bei der Ausführung gemäß Figur 2 wird dabei der das Endstück 13 bildende Finger teilweise aus der Nut 14 des Endstücks 12 zurückgezogen.

Mit abnehmender Kolbenringdicke wird auch die Tiefe und damit der lichte Querschnitt der Leckagenuten 17 immer kleiner, wodurch sich der Strömungswiderstand erhöht. Ab einem bestimmten Strömungswiderstand kann über die Leckagenuten 17 keine Leckage mehr erfolgen. Um sicherzustellen, dass dennoch ein Kolbenring 10 hier vorliegender Art nicht plötzlich dicht werden kann, ist im Bereich wenigstens eines Endstücks 12 bzw. 13 wenigstens eine radiale Durchgangsausnehmung 18 vorgesehen, deren offener Querschnitt durch eine gegenseitige Relativbewegung der beiden Endstücke 12, 13 kontrollierbar ist.

Die Durchgangsausnehmung 18 kann dem als Finger ausgebildeten Endstück 13 und/oder dem die Nut 14 enthaltenden Endstück 12 zugeordnet sein. Im dargestellten Beispiel enthält lediglich das Endstück 12 eine radiale Durchgangsausnehmung 18. Hierzu ist der die Nut 14 radial innen begrenzende Schenkel 15 im Bereich seines vorderen, unteren Rands mit einer Randausnehmung 19 versehen. Die hierdurch gebildete Durchgangsausnehmung 18 befindet sich dementsprechend im Bereich der Unterseite des freien Endes des zugeordneten Endstücks 12.

Die im Bereich des unteren Rands des radial inneren Schenkels 15 vorgesehene Durchgangsausnehmung 18 befindet sich somit praktisch im Bereich der inneren, unteren Ecke der zugeordneten Kolbenringnut 8 und damit im vom mit dem Brennraum 1 kommunizierenden Spalt zwischen Zylinderbuchse 2 und Kolben 7 am weitesten entfernten Bereich. Sofern über die Durchgangsausnehmung 18 eine Leckage stattfindet, muss der Kolbenring 10 praktisch umströmt werden, wie in Figur 3 durch den Strömungspfeil 20 angedeutet ist. Hierdurch bleibt die im Bereich der Durchgangsausnehmung 18 wirksam werdende Temperaturbeanspruchung in Grenzen.

Im Neuzustand des Kolbenrings 10 ist der das Endstück 13 bildende Finger, wie aus Figur 4 erkennbar ist, so weit in die zugeordnete Nut 14 des Endstücks 12 eingefahren, dass die Durchgangsausnehmung 18 abgedeckt und damit verschlossen ist. Die erwünschte Leckage findet dabei ausschließlich über die umfangsseitigen Nuten 17 statt. Mit zunehmendem Verschleiß wird der das Endstück 13 bildende Finger immer weiter aus der Nut 14 zurückgezogen, wie in Figur 5 angedeutet ist. Sobald das vordere Ende des das Endstück 13 bildenden Fingers die durch den Abstand L des inneren Endes der Ausnehmung 18 vom inneren Ende der Nut 14 vorgegebene Position überschreitet, wird die Durchgangsausnehmung 18 teilweise geöffnet, wie aus Figur 5 ersichtlich ist. Eine ähnliche Situation liegt auch der Figur 2 zugrunde.

Der Abstand L kann dabei so gewählt werden, dass die Durchgangsausnehmung 18 geöffnet wird, sobald die umfangsseitigen Leckagenuten 17 verschwunden oder vorzugsweise soweit reduziert sind, dass infolge des erhöhten Strömungswiderstand die hierüber stattfindende Leckage nahezu zum Erliegen kommt, wie in Figur 4 durch die nur noch mit unterbrochenen Linien gezeichnete Leckagenut 17 angedeutet ist. Es wäre aber auch denkbar, den Abstand L so zu wählen, dass die Durchgangsausnehmung 18 bereits früher geöffnet wird. Dabei kann zusätzlich die Höhe H der Durchgangsausnehmung 18 so gewählt werden, dass sich der offene Querschnitt der Durchgangsausnehmung 18 mit zunehmendem Verschleiß im selben Maße vergrößert, wie der Gesamtquerschnitt der umfangsseitigen Leckagenuten 17 verkleinert wird.

Ebenso wäre es denkbar, den Abstand L so zu wählen, dass die Durchgangsausnehmung 18 von Anfang an offen ist. In einem derartigen Fall könnte auf umfangsseitige Leckagenuten der bei 17 angedeuteten Art ganz verzichtet werden. Durch entsprechende Wahl der lichten Höhe H kann in jedem Fall die gewünschte Größe des offenen Leckagequerschnitts erreicht werden. So wäre es in einem derartigen Fall beispielsweise auch möglich, den Abstand L und die lichte Höhe H so zu wählen, dass der offene Querschnitt der Durchgangsausnehmung 18 stets dem lichten Querschnitt des Schlitzes bzw. Spaltes eines geschlitzen Kolbenrings entspricht.

Die vorstehenden Ausführungen zeigen, dass die Erfindung nicht auf das dargestellte Ausführungsbeispiel beschränkt ist.

## Patentansprüche

1. Hubkolbenmaschine, insbesondere Hubkolbenbrennkraftmaschine, vorzugsweise inform eines Zweitakt-Großdieselmotors, mit wenigstens einem in einem Zylinder (2) aufgenommenen Kolben (7), der mit wenigstens einem in einer zugeordneten Kolbenringnut (8) angeordneten Kolbenring (10) versehen ist, der nach Art von Nut und Feder ineinander eingreifende, eine über den Umfang spaltfrei durchgehende, mit einer zylinderseitigen Lauffläche zusammenwirkende, äußere Umfangsfläche bildende Endstücke (12, 13) aufweist, **dadurch gekennzeichnet, dass** wenigstens ein Endstück (12) mit wenigstens einer radialen Durchgangsausnehmung (18) versehen ist, die im geöffneten Zustand eine Leckage ermöglicht und die im Neuzustand des Kolbenrings (10) verschlossen ist und im Laufe des Verschleißes des Kolbenrings (10) **dadurch** geöffnet wird, dass die ineinander eingreifenden Endstücke (12, 13) mit zunehmendem Verschleiß immer weiter auseinander gezogen werden.

2. Hubkolbenmaschine nach Anspruch 1, wobei ein Endstück (12) eine nach radial außen und unten offene, durch einen inneren, achsparallelen Schenkel (15) und einen hierzu rechtwinklig verlaufenden, oberen Schenkel (16) begrenzte Nut (14) und das andere Endstück (13) einen in die Nut (14) eingreifenden Finger aufweisen, **dadurch gekennzeichnet, dass** der achsparallele Schenkel (15) des Endstücks (12) und/oder der Finger des Endstücks (13) wenigstens eine Durchgangsausnehmung (18) aufweist, bzw. aufweisen.

3. Hubkolbenmaschine nach einem der vorhergehenden Ansprüche, **dadurch gekennzeichnet, dass** nur ein Endstück (12 bzw. 13) eine Durchgangsausnehmung (18) aufweist.

4. Hubkolbenmaschine nach Anspruch 3, **dadurch gekennzeichnet, dass** der achsparallele Schenkel (15) des eine Nut (14) aufweisenden Endstücks (12) eine Durchgangsausnehmung (18) aufweist.

5. Hubkolbenmaschine nach einem der vorhergehenden Ansprüche, **dadurch gekennzeichnet, dass** die Durchgangsausnehmung (18) im Bereich der Unterseite des zugeordneten Endstücks (12) vorgesehen ist.

6. Hubkolbenmaschine nach einem der vorhergehenden Ansprüche, **dadurch gekennzeichnet, dass** die Durchgangsausnehmung (18) im Bereich des freien Endes des zugeordneten Endstücks (12) angeordnet ist.

7. Hubkolbenmaschine nach einem der vorhergehenden Ansprüche, wobei der Kolbenring (10) mit umfangsseitigen, von oben bis unten durchgehenden Leckageausnehmungen (17) versehen ist, **dadurch gekennzeichnet, dass** die Durchgangsausnehmung (18) so ausgebildet und angeordnet ist, dass sie zumindest dann geöffnet ist, wenn sich der Querschnitt der umfangsseitigen Leckageausnehmungen (17) durch Verschleiß so verkleinert hat, dass der Strömungswiderstand einen vorgegebenen Wert übersteigt.

8. Hubkolbenmaschine nach einem der vorhergehenden Ansprüche, wobei der Kolbenring (10) mit umfangsseitigen, von oben bis unten durchgehenden Leckageausnehmungen (17) versehen ist, **dadurch gekennzeichnet, dass** die Durchgangsausnehmung (18) so ausgebildet und angeordnet ist, dass sich ihr offener Querschnitt im selben Maße vergrößert, wie sich der Querschnitt der umfangsseitigen Leckageausnehmungen (17) durch Verschleiß verkleinert.

9. Hubkolbenmaschine nach einem der vorhergehenden Ansprüche, **dadurch gekennzeichnet, dass** die Durchgangsausnehmung (18) so ausgebildet und angeordnet ist, dass sie einen dem lichten Querschnitt des Schlitzes eines geschlitzten Kolbenrings (11) entsprechenden, offenen Querschnitt aufweist.

10. Hubkolbenmaschine nach einem der vorhergehenden Ansprüche, mit einem mehrere Kolbenringe (10, 11) umfassenden Kolbenringpaket, **dadurch gekennzeichnet, dass** zumindest der oberste Kolbenring (10) als schlitzloser Kolbenring mit nach Art von Nut und Feder ineinander eingreifenden Endstücken (12,13) ausgebildet ist und im Bereich wenigstens eines Endstücks (12) mit wenigstens einen radialen Durchgangsausnehmung (18) versehen ist.

## Claims

1. Reciprocating engine, in particular a reciprocating internal combustion engine, preferably in the form of a large two-stroke diesel engine, having at least one piston (7) that is accommodated in a cylinder (2) and is provided with at least one piston ring (10) that is arranged in an associated piston-ring groove (8) and has end pieces (12, 13) that engage into each other in the manner of a tongue and groove and form an outer peripheral face that is continuous without a gap over the periphery and cooperates with a running face on the cylinder side, **characterised in that** at least one end piece (12) is provided with at least one radial through-recess (18) which in the opened state enables there to be a leakage and is closed in the new state of the piston ring (10) and is opened in the course of wear of the piston ring (10) by virtue of the fact that the end pieces (12, 13) that engage into each other are drawn further and further apart with increasing wear.

2. Reciprocating engine according to claim 1, wherein one end piece (12) has a groove (14) that is open radially outwards and downwards and is delimited by an inner axis-parallel leg (15) and an upper leg (16) extending at right angles thereto, and the other end piece (13) has a finger that engages into the groove (14), **characterised in that** the axis-parallel leg (15) of the end piece (12) and/or the finger of the end piece (13) have or has at least one through-recess (18).

3. Reciprocating engine according to one of the preceding claims, **characterised in that** only one end piece (12 or 13) has a through-recess (18).

4. Reciprocating engine according to claim 3, **characterised in that** the axis-parallel leg (15) of the end piece (12) that has a groove (14) has a through-recess (18).

5. Reciprocating engine according to one of the preceding claims, **characterised in that** the through-recess (18) is provided in the region of the lower side of the associated end piece (12).

6. Reciprocating engine according to one of the preceding claims, **characterised in that** the through-recess (18) is arranged in the region of the free end of the associated end piece (12).

7. Reciprocating engine according to one of the preceding claims, wherein the piston ring (10) is provided with leakage recesses (17) on the peripheral side passing through from top to bottom, **characterised in that** the through-recess (18) is formed and arranged in such a way that it is opened at least when the cross section of the leakage recesses (17) on the peripheral side has diminished as a result of wear to such an extent that the flow resistance exceeds a predetermined value.

8. Reciprocating engine according to one of the preceding claims, wherein the piston ring (10) is provided with leakage recesses (17) on the peripheral side passing through from top to bottom, **characterised in that** the through-recess (18) is formed and arranged in such a way that its open cross section increases to the same extent as the cross section of the leakage recesses (17) on the peripheral side diminishes as a result of wear.

9. Reciprocating engine according to one of the preceding claims, **characterised in that** the through-recess (18) is formed and arranged in such a way that it has an open cross section that corresponds to the clear cross section of the slot of a slotted piston ring (11).

10. Reciprocating engine according to one of the preceding claims, having a piston ring stack that comprises a plurality of piston rings (10, 11), **characterised in that** at least the uppermost piston ring (10) is formed as a slot-less piston ring with end pieces (12, 13) that engage into each other in the manner of a tongue and groove and is provided, in the region of at least one end piece (12), with an least one radial through-recess (18).

## Revendications

1. Moteur à piston alternatif, en particulier moteur à combustion interne à piston alternatif, de préférence sous forme d'un grand moteur Diesel à deux temps, avec au moins un piston (7) qui est reçu dans un cylindre (2) et qui est pourvu d'au moins un segment de piston (10) lequel est disposé dans une gorge de segment (8) associée et lequel présente des parties d'extrémité (12, 13) qui sont engagées l'une dans l'autre à la manière de rainure et languette et qui forment une surface circonférentielle extérieure s'étendant sans fentes sur la circonférence et agissant de concert avec une surface de glissement du cylindre, **caractérisé par le fait qu**'au moins une partie d'extrémité (12) est pourvue d'au moins un évidement radial de passage (18) qui permet une fuite en état ouvert et qui est fermé en état neuf du segment de piston (10) et est ouvert au cours de l'usure dudit segment de piston (10) **par le fait que** les parties d'extrémité (12, 13) engagées l'une dans l'autre sont séparées de plus en plus l'une de l'autre au fur et à mesure que l'usure augmente.

2. Moteur à piston alternatif selon la revendication 1, une partie d'extrémité (12) présentant une rainure (14) ouverte radialement vers l'extérieur et vers le bas qui est limitée par une branche intérieure (15) parallèle à l'axe et par une branche supérieure (16) s'étendant à angle droit par rapport à cela, et l'autre partie d'extrémité (13) présentant un doigt qui se prend dans ladite rainure (14), **caractérisé par le fait que** la branche (15) parallèle à l'axe, de la partie d'extrémité (12) et/ou le doigt de la partie d'extrémité (13) présente ou bien présentent au moins un évidement de passage (18).

3. Moteur à piston alternatif selon l'une des revendications précédentes, **caractérisé par le fait qu'**une partie d'extrémité (12 ou bien 13) seulement présente un évidement de passage (18).

4. Moteur à piston alternatif selon la revendication 3, **caractérisé par le fait que** ladite branche (15) parallèle à l'axe, de la partie d'extrémité (12) ayant une rainure (14) présente un évidement de passage (18).

5. Moteur à piston alternatif selon l'une des revendications précédentes, **caractérisé par le fait que** l'évidement de passage (18) est prévu dans la zone de la face inférieure de la partie d'extrémité (12) associée.

6. Moteur à piston alternatif selon l'une des revendications précédentes, **caractérisé par le fait que** l'évidement de passage (18) est disposé dans la zone de l'extrémité libre de la partie d'extrémité (12) associée.

7. Moteur à piston alternatif selon l'une des revendications précédentes, le segment de piston (10) étant pourvu d'évidements de fuite (17) situés sur la circonférence et s'étendant de haut en bas, **caractérisé par le fait que** l'évidement de passage (18) est réalisé et disposé de telle façon qu'il est ouvert au moins lorsque la section des évidements de fuite (17) situés sur la circonférence a diminué tellement par suite de l'usure que la résistance à l'écoulement dépasse une valeur donnée.

8. Moteur à piston alternatif selon l'une des revendications précédentes, le segment de piston (10) étant pourvu d'évidements de fuite (17) situés sur la circonférence et s'étendant de haut en bas, **caractérisé par le fait que** l'évidement de passage (18) est réalisé et disposé de telle façon que sa section ouverte augmente dans la même mesure où la section des évidements de fuite (17) situés sur la circonférence diminue par usure.

9. Moteur à piston alternatif selon l'une des revendications précédentes, **caractérisé par le fait que** l'évidement de passage (18) est réalisé et disposé de telle manière qu'il présente une section ouverte correspondant à la section libre de la fente d'un segment de piston (11) fendu.

10. Moteur à piston alternatif selon l'une des revendications précédentes, avec un paquet de segments de piston comprenant plusieurs segments de piston (10, 11), **caractérisé par le fait qu'**au moins le segment de piston (10) le plus haut est réalisé comme segment de piston exempt de fente, avec des parties d'extrémité (12, 13) engagées l'une dans l'autre à la manière de rainure et languette et est pourvu, dans la zone d'au moins une partie d'extrémité (12), d'au moins un évidement de passage (18) radial.
